# EUROPÄISCHE PATENTANMELDUNG

(11) **EP 1 398 555 A1**
(43) Veröffentlichungstag der Anmeldung: **17.03.2004**
(21) Anmeldenummer: 03020629.6
(22) Anmeldetag: 10.09.2003
(51) Int. Cl.: F16L 25/00, F16L 21/06

(54) **Verschleissring zur Anbringung an einem Rohr, Schlauch, Kabel oder dgl., und mit dem Verschleissring versehene Wellrohranordnung**

(30) Priorität: 11.09.2002 DE 20213994 U
(71) Anmelder: Reiku GmbH, 51674 Wiehl-Bomig (DE)
(72) Erfinder: Rumpel, Jürgen, 51580 Reichshof-Mittelagger (DE)
(74) Vertreter: Glawe, Delfs, Moll & Partner

(57) **Zusammenfassung**

Ein Verschleißring (3) zur Anbringung an einem Rohr, Schlauch, Kabel oder dgl. (1) ist dadurch gekennzeichnet, dass im Inneren des Verschleißrings (3) mindestens ein zur Anlage an dem Rohr, Schlauch oder Kabel (1) bestimmter Innenring (13) drehbar gelagert ist. Hierdurch kann das Rohr oder dgl. (1) relativ zum Verschleißring (3) gedreht werden, ohne dass dies zu Reibungen zwischen dem Rohr (1) und dem Verschleißring (3), und damit zu zusätzlichem Verschleiß des Rohres (1) führt. Vorzugsweise ist der Verschleißring (3) als Kopplungsring zum Koppeln zweier Rohrabschnitte (1,1'), insbesondere Wellrohrabschnitte ausgebildet, wobei mit dem Verschleißring (3) verbundene Rohrabschnitte (1,1') gegeneinander gedreht werden können.

## Beschreibung

Die Erfindung betrifft einen Verschleißring zur Anbringung an einem Rohr, Schlauch, Kabel oder dgl. Bevorzugt ist der Verschleißring zur Anbringung an einem Wellrohr ausgebildet.

Verschleißringe dieser Art sind aus DE 298 14 418 U1 und DE 299 20 972 bekannt. Sie werden an Rohren, Schläuchen, Kabeln oder dgl. an solchen Stellen angebracht, wo diese einer äußeren Verschleißeinwirkung z.B. durch Scheuern an beweglichen Maschinenteilen, ausgesetzt sind, um sie vor einem solchen Verschleiß zu schützen. Der Verschleißring besteht in der Regel aus zwei Halbringen, die durch Verbindungsmittel, wie Schrauben oder elastische Schnappverbindungen, miteinander verbunden werden. Falls der Verschleißring zur Anbringung an einem Wellrohr bestimmt ist, besitzt er an seinem Innenumfang vorspringende Rippen für den Eingriff in die Wellennuten des Wellrohres. Ist eine ausreichende Anzahl solcher Innenrippen vorhanden, so kann der Verschleißring auch als Verbindungsmuffe zum Verbinden zweier Wellrohrenden dienen, wie aus DE 298 14 418 U1 bekannt. Die so miteinander verbundenen Wellrohre können unterschiedliche Eigenschaften, z.B. unterschiedliche Flexibilität aufweisen.

Wenn der Verschleißring zwei Wellrohrenden miteinander verbindet, aber auch in anderen Fällen, kann es erwünscht sein, eine Drehung des Wellrohres relativ zum Verschleißring zu ermöglichen. Ist der Verschleißring auf dem Wellrohr festgeklemmt, ist eine solche Drehung nicht möglich. Wird die Klemmung am Verschleißring soweit gelöst, daß das Wellrohr drehbar ist, so kann durch die Reibung zwischen dem Wellrohr und dem locker sitzenden Verschleißring ein zusätzlicher vorzeitiger Verschleiß des Wellrohres eintreten.

Der Erfindung liegt die Aufgabe zugrunde, den Verschleißring so auszugestalten, daß er ein Rohr, einen Schlauch, ein Kabel oder dgl., insbesondere ein Wellrohr, drehbar aufnehmen kann, ohne daß dadurch ein Verschleiß zwischen Verschleißring und Wellrohr verursacht wird.

Die erfindungsgemäße Lösung der Aufgabe ist im Anspruch 1 angegeben. Die übrigen Ansprüche beziehen sich auf vorteilhafte weitere Ausgestaltungen der Erfindung.

Durch den erfindungsgemäß vorgesehenen Innenring wird die Drehbarkeit des Rohres, Schlauches, Kabels oder dgl. relativ zum Verschleißring gewährleistet. Zwischen dem Innenring und dem Rohr, Schlauch oder Kabel findet dabei keine Verdrehung statt, so daß die Oberfläche des Rohres, Schlauches oder Kabels auch keinem zusätzlichen Verschleiß ausgesetzt ist. Ein durch die Verdrehung bedingter Verschleiß kann nur zwischen dem Innenring und dem Verschleißring auftreten, was durch die konstruktive Gestaltung dieser beiden Komponenten berücksichtigt werden kann.

Ausführungsformen der Erfindung werden anhand der Zeichnungen näher erläutert es zeigt :
- Fig. 1: eine Wellrohranordnung mit einem erfindungsgemäßen Verschleißring in Seitenansicht.
- Fig. 2: die Wellrohranordnung gemäß Fig. 1 im Längsschnitt
- Fig. 3: den Verschleißring gemäß einer ersten Ausführungsform im achssenkrechten Schnitt
- Fig. 4: einen Halbring des Verschleißringes 3 in Seitenansicht
- Fig. 5: eine Hälfte des Innenrings in Seitenansicht
- Fig. 6: den Innenring im achssenkrechten Schnitt
- Fig. 7: ein Detail aus Fig. 5
- Fig. 8: eine Ansicht der beiden separaten Hälften des Innenrings
- Fig. 9: eine geänderte Ausführungsform des Verschleißrings im achssenkrechten Schnitt
- Fig. 10: einen Halbring des Verschleißringes gemäß Fig. 9 in Seitenansicht.

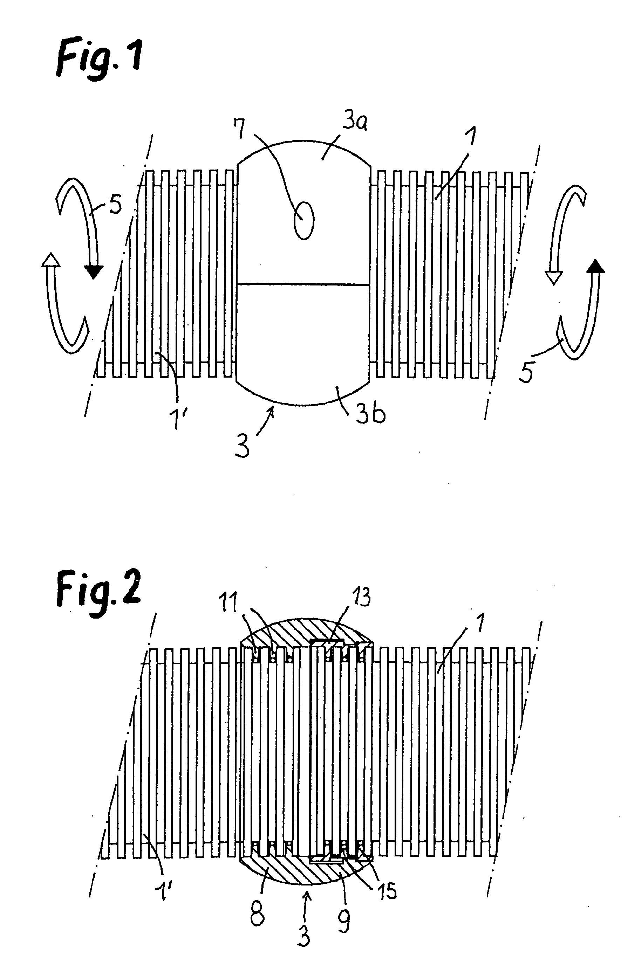

Gemäß Fig. 1 werden die Enden von zwei Wellrohren 1, 1' durch einen als Verbindungsmuffe dienenden Verschleißring 3 miteinander verbunden derart, daß sie relativ zueinander verdrehbar sind, wie durch die Pfeile 5 angedeutet. Der Verschleißring 3 besteht, wie an sich bekannt, aus zwei Halbringen 3a, 3b, die durch geeignete Verbindungsmittel, z.B. in tangentialen Löchern 7 angeordnete Schrauben (nicht dargestellt), miteinander verbunden sind. Der Verschleißring 3 besteht aus einem für seine Funktion geeigneten, verschleißfesten Material, insbesondere Kunststoff, und hat die übliche sphärische bzw. ballige Außenform.

Wie aus Fig. 2 ersichtlich hat der Verschleißring 3 zwei unterschiedlich gestaltete axiale Bereiche 8, 9. Der in Fig. 2 linke Bereich 8 hat Innenrippen 11, die in die Wellennuten des einen Wellrohres 1' einzugreifen, um dieses am Verschleißring 2 axial unverschiebbar und im wesentlichen auch unverdrehbar festzulegen. Der in Fig. 2 rechte Bereich 9 des Verschleißringes 3 ist zur Aufnahme eines Innenrings 13 ausgestaltet, der in dem Verschleißring 3 drehbar gelagert ist. Dieser Innenring 13 hat nach innen vorspringende Rippen 15, die in die Wellennuten des Wellrohres 1 eingreifen, um dieses am Innenring 13 axial unverschiebbar und im wesentlichen auch unverdrehbar festzulegen. Durch die Drehbarkeit des Innenrings 13 gegenüber dem Verschleißring 3 ist auch das Wellrohr 1 relativ zum Verschleißring 3 und damit relativ zum anderen Wellrohr 1' drehbar.

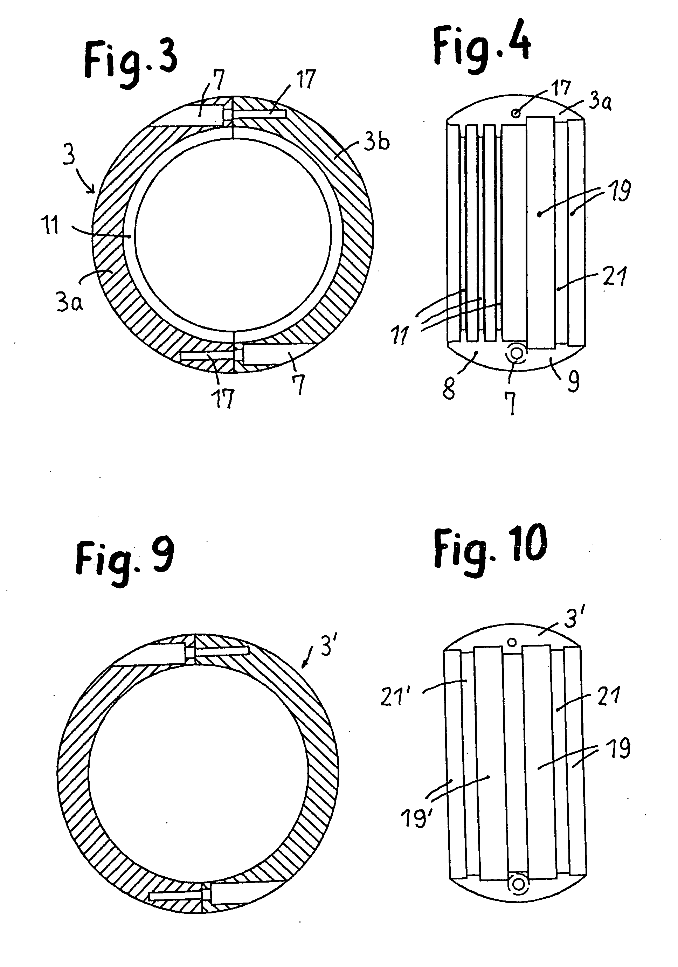

Fig. 3 zeigt einen achssenkrechten Schnitt durch den Verschleißring 3 mit seinen beiden Halbringen 3a, 3b, die durch Schrauben (nicht dargestellt) zusammengehalten werden, die in die tangentialen Bohrungen 7 des einen Halbrings eingeführt werden und in Gewindebohrungen 17 des jeweils anderen Halbringes eingeschraubt werden. Nach innen springen die Innenrippen 11 für den Eingriff in das Wellrohr vor.

Fig. 4 zeigt einen der Halbringe 3a des Verschleißrings 3 in Seitenansicht. In dem in Fig. 4 linken axialen Bereich 8 sind drei Innenrippen 11 für den Eingriff in das Wellrohr erkennbar. Der in Fig. 4 rechte Bereich 9 weist ein Gleitlager 19 für die drehbare Lagerung des Innenrings 13 (in Fig. 4 nicht dargestellt) sowie eine nach innen vorspringende Rippe 21 für den Eingriff in eine entsprechende Umfangsnut des Innenrings 13 auf.

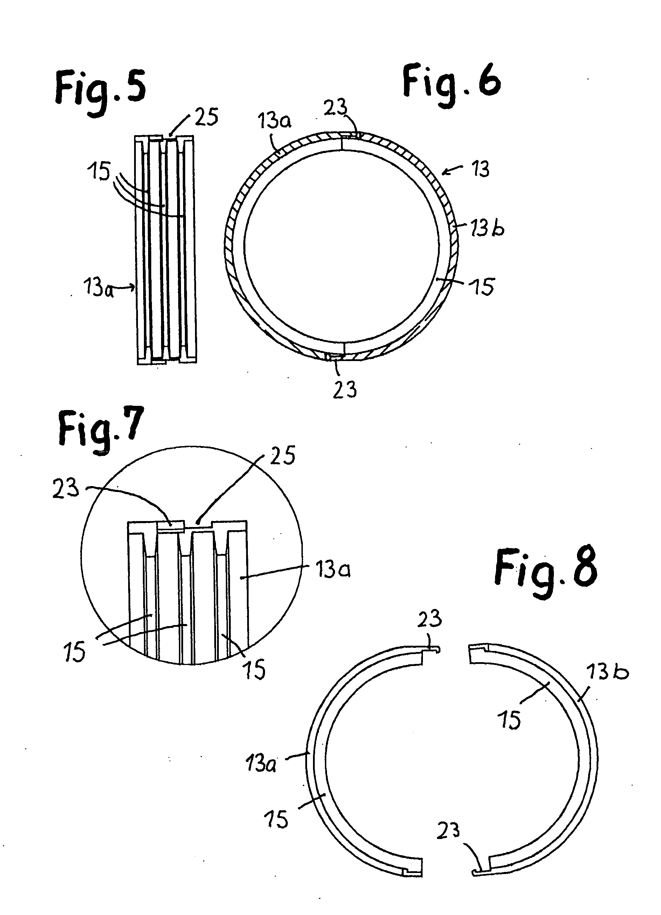

Gemäß Fig. 6 und Fig. 8 besteht der Innenring 13 aus zwei Halbringen 13a, 13b, die durch elastisch einrastende Verbindungshaken 23 miteinander verbunden sind. Fig. 5 zeigt den Halbring 13a in Seitenansicht und Fig. 7 ein vergrößertes Detail von Fig. 5.

Jeder Halbring 13a, 13b und damit der gesamte Innenring 13, trägt drei Innenrippen 15 für den Eingriff in die Wellennuten des Wellrohres. Am Außenumfang des Innenrings 13 befindet sich eine flache Nut 25 für den Eingriff der Innenrippe 21 des Verschleißrings 3 (Fig. 4), um den am Verschleißring 3 drehbar gelagerten Innenring 13 axial unbeweglich zu führen.

Bei der in Fig. 9 und 10 dargestellten, geänderten Ausführungsform des Verschleißrings 3' fehlen die in Fig. 2, 3 und 4 dargestellten Innenrippen 11 für den direkten Eingriff am Wellrohr. Statt dessen sind beide axiale Bereiche des Verschleißrings 3 als Lager mit Nuten 19 bzw. 19' und Rippen 21, 21' zur drehbaren Lagerung von zwei Innenringen 13 der in Fig. 5 bis 8 gezeigten Art ausgebildet. Auf diese Weise können in dem Verschleißring 3' nebeneinander zwei drehbare Innenringe 13 angeordnet werden, von denen jeder das Ende eines Wellrohrs 1 bzw. 1' aufnehmen kann, so daß beide Wellrohre 1, 1' relativ zum Verschleißring 3', und damit natürlich auch relativ zueinander, drehbar sind.

Die Erfindung ist nicht auf die Einzelheiten der dargestellten Ausführungsform beschränkt. Beispielsweise können die beiden Hälften 3a, 3b des Verschleißrings anstatt durch Schrauben auch durch eine elastische Schnappverbindung zusammengehalten werden, wie aus DE 299 20 972 U1 bekannt. Der Verschleißring 3 braucht nicht zur Verbindung von zwei Wellrohrenden 1, 1' zu dienen, sondern kann auch ein durchgehendes Wellrohr drehbar aufnehmen.

## Patentansprüche

1. Verschleißring zur Anbringung an einem Rohr, Schlauch, Kabel oder dgl., **dadurch gekennzeichnet, daß** im Innern des Verschleißrings (3) ein zur Anlage an dem Rohr, Schlauch oder Kabel bestimmter Innenring (13) drehbar gelagert ist.

2. Verschleißring nach Anspruch 1 für die Anbringung an einem Wellrohr, **dadurch gekennzeichnet, daß** der Innenring (13) mindestens einen nach innen gerichteten Vorsprung (15) für den Eingriff in eine Wellennut des Wellrohres (1) aufweist.

3. Verschleißring nach Anspruch 1, **dadurch gekennzeichnet, daß** zwei unabhängig voneinander drehbar gelagerte Innenringe (13) in Achsrichtung zueinander versetzt angeordnet sind.

4. Verschleißring nach Anspruch 1, **dadurch gekennzeichnet, daß** der Verschleißring (3) einen ersten axialen Bereich (9), in dem der Innenring (13) drehbar gelagert ist, und einen zweiten axialen Bereich (8), der zur direkten Anlage an dem Rohr, Schlauch, Kabel oder dgl. ausgebildet ist, aufweist.

5. Verschleißring nach Anspruch 4 für die Anbringung an einem Wellrohr, **dadurch gekennzeichnet, daß** der zweite axiale Bereich (8) des Verschleißrings (3) mindestens einen nach innen vorspringenden Vorsprung (11) für den Eingriff in eine Wellennut des Wellrohres (1) aufweist.

6. Verschleißring nach Anspruch 1, **dadurch gekennzeichnet, daß** der Innenring (13) aus zwei Halbringen (13a, 13b) besteht.

7. Verschleißring nach Anspruch 6, **dadurch gekennzeichnet, daß** die beiden Halbringe (13a, 13b) des Innenrings (13) durch Verbindungsmittel (23) miteinander verbunden sind.

8. Verschleißring nach Anspruch 7, **dadurch gekennzeichnet, daß** die Verbindungsmittel (23) elastische Einrastmittel sind.

9. Verschleißring nach Anspruch 1, **dadurch gekennzeichnet, daß** am Innenumfang des Verschleißrings (3) und am Außenumfang des Innenrings (13) ineinandergreifende Vorsprünge (21) bzw. Nuten (25) vorgesehen sind, durch die der Innenring (13) am Verschleißring (3) drehbar, aber in Axialrichtung unverschiebbar geführt ist.

10. Anordnung eines Wellrohres mit einem Verschleißring nach einem der Ansprüche 1 bis 8, **dadurch gekennzeichnet, daß** das Ende eines Wellrohres (1) in dem Innenring (13) aufgenommen ist derart, daß das Ende des Wellrohres (1) über den Innenring (13) drehbar in dem Verschleißring (3) gehalten ist.

11. Anordnung nach Anspruch 10, **dadurch gekennzeichnet, daß** das Ende eines zweiten Wellrohres (1') in dem Verschleißring (3) gehalten ist derart, daß die Enden zweier Wellrohre (1, 1') relativ zueinander verdrehbar durch den Verschleißring (3) gekoppelt sind.
